# EUROPÄISCHE PATENTANMELDUNG

(11) **EP 0 908 642 A2**
(43) Veröffentlichungstag der Anmeldung: **14.04.1999**
(21) Anmeldenummer: 98118636.4
(22) Anmeldetag: 02.10.1998
(51) Int. Cl.: F16D 65/16

(54) **Bremsaktuator für eine elektrische Bremsanlage mit Feststellbremse**

(30) Priorität: 08.10.1997 DE 19744356
(71) Anmelder: Continental Aktiengesellschaft, 30165 Hannover (DE)
(72) Erfinder: Dieckmann, Thomas, Dr., 30982 Pattensen (DE); Leitermann, Wulf, 70806 Kornwestheim (DE)

(57) **Zusammenfassung**

Bremsaktuator (2) für eine elektrische Bremsanlage, der zumindest folgende Bestandteile enthält:
- einen Elektromotor (4)
- eine Zuspannvorrichtung (6,8,36), die mit dem Elektromotor (4) in Wirkverbindung steht und mittels der Bremsbeläge (12) gegen eine Reibfläche (16) pressbar sind
- eine Feststellbremse (18), die in einer ersten Position eine Bewegung der Zuspannvorrichtung (68,36) ungehindert zulässt und in einer zweiten Position die Bewegung der Zuspannvorrichtung (68,36) hemmt
- eine Betätigungsvorrichtung (28), mit der die Feststellbremse (18) von der ersten Position in die zweite Position überführbar ist
   **dadurch gekennzeichnet,** dass
- die Betätigungsvorrichtung (28) ein Memorymetallelement (58), das in einem ersten Temperaturbereich eine Ausgangsposition und in einem zweiten Temperaturbereich eine Endposition einnimmt und dass
- an dem Memoryelement (58) eine gezielte Temperaturänderung herbeiführbar ist, durch die das Memorymetallelement (58) von der Ausgangsposition in die Endposition überführbar ist und dass
- die Feststellbreme (18) infolge der Überführung des Memorymetallelementes (58) von der Ausgangsposition in die Endposition von der ersten Position in die zweite Position übergeht.

## Beschreibung

Die Erfindung betrifft einen Bremsaktuator für eine elektrische Bremsanlage, der zumindest folgende Bestandteile enthält:
- einen Elektromotor
- eine Zuspannvorrichtung, die mit dem Elektromotor in Wirkverbindung steht und mittels der Bremsbeläge gegen eine Reibfläche pressbar sind
- eine Feststellbremse, die in einer ersten Position eine Bewegung der Zuspannvorrichtung ungehindert zulässt und in einer zweiten Position die Bewegung der Zuspannvorrichtung hemmt
- eine Betätigungsvorrichtung, mit der die Feststellbremse von der ersten Position in die zweite Position überführbar ist.

Ein derartiger Bremsaktuator für eine elektrische Bremsanlage ist beispielsweise aus der EP 0 520 525 B1 bekannt. Der Bremsaktuator enthält einen Elektromotor mit einer Motorachse, die bei Betätigung des Bremsaktuators in Rotation versetzt wird und über ein Getriebe Bremsbeläge gegen eine Bremstrommel bzw. eine Bremsscheibe presst. Darüber hinaus enthält der Bremsaktuator eine Feststellbremse, die - wie im Folgenden erläutert - aufgebaut ist. An dem dem Getriebe gegenüberliegenden Ende der Motorachse ist eine Reibungsplatte angeordnet, die sich bei Betätigung des Elektromotors mit der Motorachse dreht. Dieser Reibungsplatte gegenüberliegend ist eine weitere Reibungsplatte drehfest angeordnet, die gegenüber der zuerst genannten Reibungsplatte axial beweglich ist. Üblicherweise besteht zwischen den beiden genannten Reibungsplatten ein Luftspalt, so dass die Drehung der Motorachse bei Betätigung des Bremsaktuators in beiden Drehrichtungen ungehindert möglich ist. Soll eine Radbremse jedoch mit Hilfe des Bremsaktuators festgestellt werden, so werden zunächst durch Betätigung des Bremsaktuators die Bremsbeläge gegen die Bremstrommel gepresst und somit eine Bremskraft erzeugt. Danach wird mit Hilfe eines zweiten Elektromotors die zweite Reibungsplatte in eine axiale Bewegung versetzt, so dass der Luftspalt zwischen den Reibungsplatten verschwindet und die beiden Reibungsplatten reibschlüssig aneinander gepresst werden. Infolgedessen wird eine Drehung der Motorachse des ersten Elektromotors unterbunden, so dass sich der Bremsaktuator nicht durch Rückstellkräfte zurückstellen kann und die zuvor eingestellte Bremskraft an dem entsprechenden Rad erhalten bleibt.
Bei dem aus der EP 0 520 521 bekannten Bremsaktuator ist die Betätigungsvorrichtung, mit der die Feststellbremse von der ersten Position in die zweite Position überführbar ist, als (zweiter) Elektromotor ausgebildet. Eine hohe Funktionssicherheit der Betätigungsvorrichtung ist somit sichergestellt. Es ist jedoch festzustellen, dass eine Betätigungsvorrichtung in Form eines Elektromotors zum einen schwer ist und zum anderen einen großen Bauraum benötigt, der insbesondere dann, wenn der Bremsaktuator in einen Personenkraftwagen eingesetzt werden soll, nicht zur Verfügung steht. Darüber hinaus sind Elektromotoren teuer.

Aus der DE 196 01 983 ist ebenfalls ein Bremsaktuator für eine elektrische Bremsanlage der oben genannten Art bekannt. Bei dem aus dieser Druckschrift bekannten Bremsaktuator besteht die Feststellbremse aus einem Metallstift mit einem Reibkopf, der in einer ersten Position eine Bewegung der Zuspannvorrichtung des Bremsaktuators ungehindert zulässt und in einer zweiten Position in Anlage mit der Zuspannvorrichtung kommt und dann die Bewegung der Zuspannvorrichtung hemmt. Der Metallstift mit dem Reibkopf wird mit Hilfe eines Elektromagneten (Betätigungsvorrichtung für die Feststellbremse) in der ersten Position gehalten, dessen Erregerspule dann stromdurchflossen ist. Durch Abstellen des Stromflusses durch die Erregerspule des Elektromagneten geht der Metallstift mit dem Reibkopf von der ersten Position in die zweite Position über.

Durch die Verwendung eines Elektromagneten als Betätigungsvorrichtung ist eine hohe Funktionssicherheit gewährleistet. Es ist jedoch festzustellen, dass auch ein Elektromagnet relativ schwer ist und relativ viel Bauraum benötigt, wenn auch nicht so viel wie ein separater Elektromotor, wie er bei dem aus der EP 0520 525 B1 bekannten Bremsaktuator verwendet wird.

Aus der nachveröffentlichten deutschen Patentanmeldung mit dem Aktenzeichen 197 11 851 ist ebenfalls ein Bremsaktuator der eingangs genannten Art bekannt. Bei dem aus dieser Druckschrift bekannten Bremsaktuator besteht die Feststellbremse aus einem Konusring, der axial verschiebbar auf der Motorachse des Elektromotors des Bremsaktuators angeordnet ist. In einer ersten axialen Position lässt der Konusring eine Drehung der Motorachse in beiden Richtungen ungehindert zu und in einer zweiten axialen Position befindet sich der Konusring im Eingriff mit der Motorachse und dreht sich mit dieser, wobei in der zweiten axialen Position des Konusringes eine Drehung der Motorachse in eine Drehrichtung dazu führt, dass der Konusring in Eingriff mit einem gegenüber der Motorachse drehfesten Sperring des Bremsaktuators gelangt. Der Konusring ist dann zwischen der Motorachse und dem Sperring 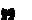 eingeklemmt" und die Bewegung der Motorachse und damit der Zuspannvorrichtung des Bremsaktuator ist somit gehemmt. Eine Drehung der Motorachse in die andere Drehrichtung führt hingegen dazu, dass sich der Eingriff zwischen der Motorachse und dem Konusring und zwischen dem Sperrring und dem Konusring löst, so dass dann die Motorachse und damit die Zuspannvorrichtung wieder frei beweglich ist. Der Konusring wird mit Hilfe einer Betätigungsvorrichtung, die mechanisch, elektromagnetisch oder elektromotorisch betätigbar ist, von der ersten axialen Position in die zweite axiale Position überführt. Der Druckschritt ist nicht zu entnehmen, wie die Betätigungsvorrichtung im Einzelnen aufgebaut ist.

Der Erfindung liegt die Aufgabe zugrunde, einen Bremsaktuator zu schaffen, dessen Betätigungsvorrichtung für die Feststellbremse einen einfachen Aufbau aufweist, leicht ist, und wenig Bauraum benötigt.

Gemäß den kennzeichnenden Merkmalen des Anspruchs 1 wird die Aufgabe dadurch gelöst, dass
- die Betätigungsvorrichtung ein Memorymetallelement ist, das in einem ersten Temperaturbereich eine Ausgangsposition und in einem zweiten Temperaturbereich eine Endposition einnimmt und dass
- an dem Memorymetallelement eine gezielte Temperaturänderung herbeiführbar ist, durch die das Memorymetallelement von der Ausgangsposition in die Endposition überführbar ist und dass
- die Feststellbremse infolge der Überführung des Memorymetallelements von der Ausgangsposition in die Endposition von der ersten Position in die zweite Position übergeht.

Die mit der Erfindung erzielten Vorteile sind insbesondere darin zu sehen, dass die Betätigungsvorrichtung für die Feststellbremse sehr leicht ist und einen kompakten Aufbau aufweist. Es besteht somit die Möglichkeit, die Betätigungsvorrichtung in den Bremsaktuator zu integrieren, ohne die äußeren Abmessungen des Bremsaktuators vergrößem zu müssen. Darüber hinaus lässt sich eine Betätigungsvorrichtung in Form eines Memorymetallelementes preiswert und somit großserientauglich realisieren.

Gemäß einem ersten Ausführungsbeispiel der Erfindung nach Anspruch 2 liegt die Temperatur des ersten Temperaturbereichs höher als die Temperatur des zweiten Temperaturbereichs. Das bedeutet, dass das Memorymetallelement in dem ersten hohen Temperaturbereich die Ausgangsposition einnimmt und abgekühlt werden muss, damit es von der Ausgangsposition in die Endposition übergeht und dadurch die Feststellbremse betätigt.

Gemäß einem weiteren Ausführungsbeispiel der Erfindung nach Anspruch 3 liegen die Temperaturen des ersten Temperaturbereiches niedriger als die Temperaturen des zweiten Temperaturbereiches. Das bedeutet, dass das Memorymetallelement in dem ersten niedrigen Temperaturbereich seine Ausgangsposition einnimmt und durch Erwärmung in seine Endposition überführt wird, wobei das Memorymetallelement durch die Überführung von dem ersten Temperaturbereich in den zweiten Temperaturbereich die Feststellbremse betätigt. Der Vorteil dieses Ausführungsbeispiels ist darin zu sehen, dass das Memorymetallelement nur für eine kurze Zeit erwärmt zu werden braucht, um es von der Ausgangsposition in die Endposition zu überführen.

Gemäß einer Weiterbildung des Ausführungsbeispiels gemäß Anspruch 3 nach Anspruch 4 liegt die Betriebstemperatur des Bremsaktuator im gesamten Betriebstemperaturspektrum unterhalb der Temperaturen im zweiten Temperaturbereich. Dadurch ist sichergestellt, dass selbst bei einer maximalen Betriebstemperatur des Bremsaktuators das Memorymetallelement nicht aus Versehen von dem ersten niedrigen Temperaturbereich in den zweiten hohen Temperaturbereich überführt wird und infolgedessen von seiner Ausgangsposition in seine Endposition übergeht. Es ist also ausgeschlossen, dass bei hohen Betriebstemperaturen des Bremsaktuators die Feststellbremse unkontrolliert betätigt wird.

Gemäß einer Weiterbildung der Erfindung nach Anspruch 5 steht das Memorymetallelement mit einer Rückstellfeder in Wirkverbindung, die das Memorymetallelement von der Endposition in die Ausgangsposition überführt, wenn die Temperatur an dem Memory-Metallelement von dem zweiten Temperaturbereich in den ersten Temperaturbereich übergeht. Der Vorteil dieser Weiterbildung wird verständlich, wenn man sich Folgendes vor Augen hält: Memorymetallelemente haben zwei Zustände. Bei einem Übergang von dem ersten Zustand in den zweiten Zustand ändern diese Memorymetallelemente ihre Form und können dabei Arbeit verrichten. Bei dem umgekehrten Übergang von dem zweiten Zustand in den ersten Zustand (also z.B. bei einer Abkühlung des Memorymetallelementes, nachdem es vorher erwärmt worden ist) ändern Memorymetallelemente zwar auch ihre Form, aber nicht alle Memorymetallelemente können dann Arbeit verrichten und beispielsweise ein Element bewegen, mit dem sie in Wirkverbindung stehen. Stehen Memorymetallelemente, die bei einem Übergang keine Arbeit verrichten können, gemäß der Weiterbildung des Anspruchs 5 mit einer Rückstellfeder in Wirkverbindung, so kann die Arbeit an dem Element beim Übergang des Memorymetallelements von dem zweiten Zustand in den ersten Zustand durch die Rückstellfeder verrichtet werden.

Gemäß einer Weiterbildung der Erfindung nach Anspruch 6 wird eine gezielte Erwärmung des Memorymetallelementes durch einen durch das Memorymetallelement geleiteten Stromfluss erzeugt. Der Vorteil dieser Weiterbildung ist darin zu sehen, dass das Memorymetallelement durch die Ohmschen Verluste innerhalb des Elementes erwärmt wird. Gesonderte Elemente zur Erwärmung des Memorymetallelementes entfallen damit.

Gemäß einer Weiterbildung der Erfindung nach Anspruch 7 wird das Memorymetallelement bei einem Übergang von der Ausgangsposition in die Endposition ausschließlich auf Zug belastet. Der Vorteil dieser Weiterbildung ist darin zu sehen, dass bei einer Zugbelastung keine Knickungen an dem Memorymetallelement auftreten können, durch das das Element beschädigt werden könnte.

Ein Ausführungsbeispiel und weitere Vorteile der Erfindung werden im Zusammenhang mit den nachstehenden Figuren erläutert, darin zeigt:
Figur 1 einen Bremsaktuator im Querschnitt,
Figur 2 einen Bremsaktuator im Querschnitt,
Figur 3 einen Ausschnitt aus der Figur 2 in Explosionsdarstellung.

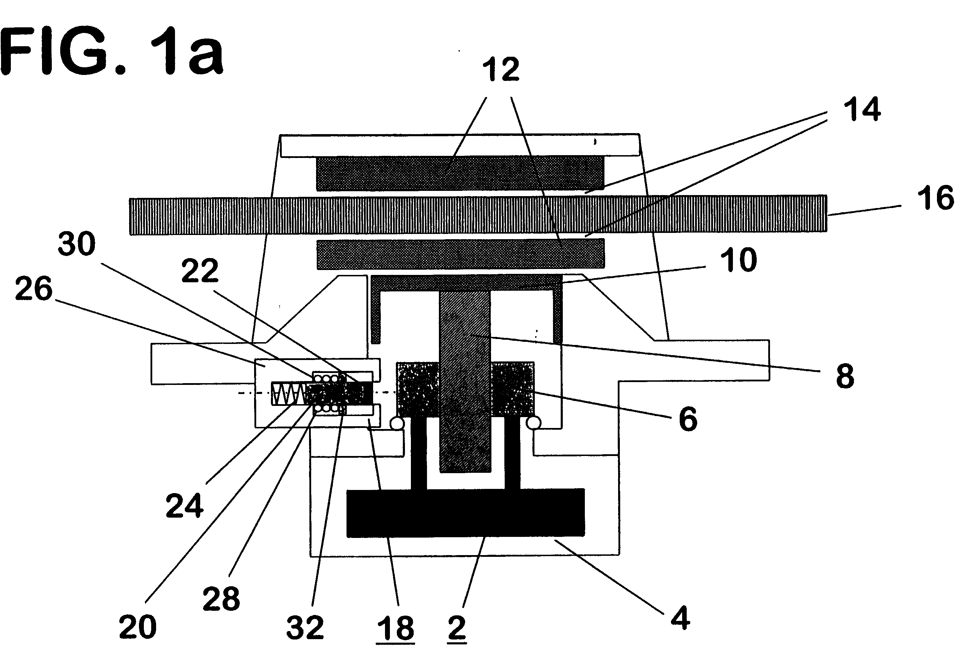

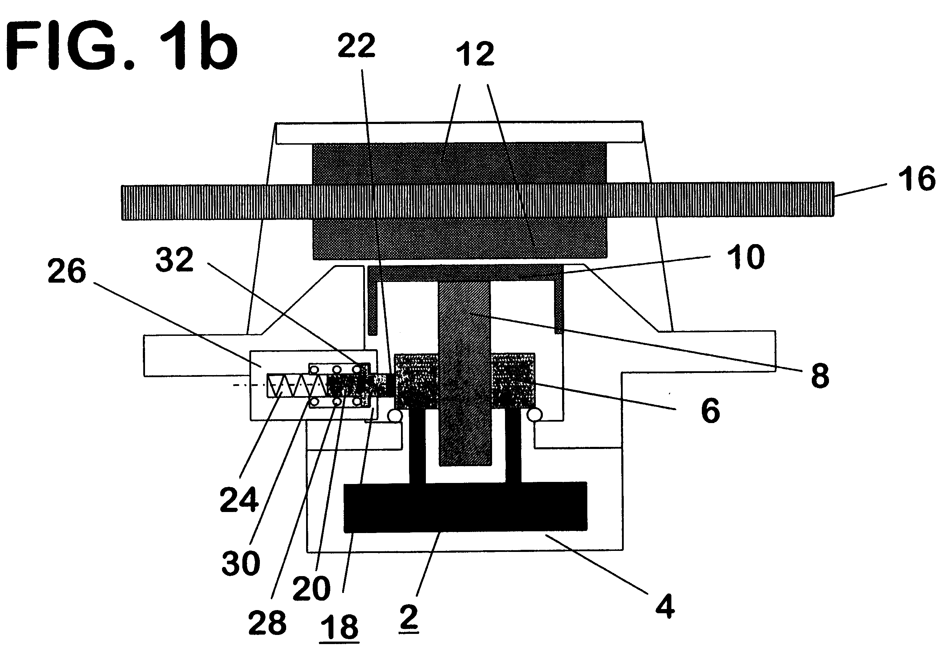

Figur 1 zeigt in schematischer Darstellung einen Bremsaktuator im Querschnitt, wobei nur die für die nachfolgenden Erläuterungen notwendigen Bestandteile dargestellt sind. Der Bremsaktuator 2 enthält einen Elektromotor 4, mit dessen Hilfe die Spindelmutter 6 in eine Drehbewegung um eine Achse versetzt werden kann, die durch die Spindel 8 vorgegeben ist. Die Drehbewegung der Spindelmutter 6 bewirkt eine axiale Bewegung der Spindel 8 und eine axiale Bewegung des Bremskolbens 10. Dadurch werden bei einem Bremsvorgang die mit dem Bremskolben 10 in Wirkverbindung stehenden Bremsbeläge 12 ebenfalls in eine axiale Bewegung versetzt, so dass die Bremsbeläge 12 schließlich nach Durchlaufen des Luftspaltes 14 an der Reibfläche 16, hier in Form einer Bremsscheibe 16, anliegen und eine Bremskraft hervorrufen.

Der Bremsaktuator 2 enthält neben den bisher erläuterten Bestandteilen eine Feststellbremse 18, die in einem Gehäuse 26 untergebracht ist und über einen Metallstift 20 mit einem Reibkopf 22 und einer Andruckfeder 24 verfügt. Die Feststellbremse 18 steht mit einem Betätigungsmechanismus in Wirkverbindung. Der Betätigungsmechanismus 28 besteht aus einem Memorymetallelement 28, hier in Form einer Memory-Metallspiralfeder 28, die den Metallstift 20 der Feststellbremse 18, wie in der Figur 1 gezeigt, axial umfasst. Ein Ende der Memory-Metallspiralfeder 28 ist an der Rückwand 30 einer Vertiefung in dem Gehäuse 26 befestigt und das andere Ende der Memory-Metallspiralfeder 28 drückt auf den Flansch 32 des Metallstiftes 20. Im Folgenden wird erläutert, wie die Betätigungsvorrichtung 28 funktioniert:

In dem in der Figur 1a gezeigten Zustand des Bremsaktuators 2 wird durch die Memoryspiralfeder 28 ein Strom geleitet, dass diese erwärmt ist. Die Memory-Metallspiralfeder 28 nimmt somit ihre Ausgangsposition ein, die dadurch gekennzeichnet ist, dass sie zusammengezogen ist und den Metallstift 20 der Feststellbremse 18 gegen die Kraft der Andruckfeder 24 in dem Gehäuse 26 zurückhält. Soll das Rad, dem der Bremsaktuator 2 zugeordnet ist, festgestellt werden, so geschieht Folgendes:

Zunächst werden die Bremsbeläge 12 an die Bremsscheibe 16 angepresst und dann wird unter Beibehaltung des Zustandes der Stromfluss durch die Memory-Metallspiralfeder 28 unterbrochen, so dass sich diese abkühlt und infolgedessen von der Ausgangsposition (siehe Figur 1a) in die Endposition (siehe Figur 1b) übergeht, indem sie sich ausdehnt. Bei diesem Übergang von der Ausgangspositon in die Endposition kann die Memory-Metallspiralfeder 28 nur wenig Arbeit an dem Metallstift 20 verrichten. Aus diesem Grunde wird die Memory-Metallspiralfeder 28 durch die Andruckfeder 24 unterstützt, mit Hilfe der der Metallstift 20 mit seinem Reibkopf 22 an die Spindelmutter 6 gepresst wird. Damit ist eine Bewegung der Spindelmutter 6 und der Spindel 8 gehemmt, so dass der Bremsaktuator 2 in dem Zustand verbleibt, in den er zuvor eingestellt worden ist. Das Rad des Kraftfahrzeuges, dem der Bremsaktuator 2 zugeordnet ist, ist also festgestellt.

Zum Lösen der Feststellbremse wird wiederum ein Strom durch die Memory-Metallspiralfeder 28 geleitet, so dass diese wiederum von der Ausgangsposition in die Endposition übergeht. Bei diesem Übergang kann die Memory-Metallspiralfeder 28 nunmehr Arbeit an dem Metallstift 20 verrichten und diesen gegen die Kraft der Andruckfeder 24 in das Gehäuse 26 der Feststellbremse zurückdrücken. Die Feststellbremse befindet sich dann wieder in der Position, in der sie eine Bewegung der Zuspannvorrichtung, bestehend aus der Spindelmutter 6 und der Spindel 8, ungehindert zulässt und bleibt dort solange, bis der Strom durch die Memorymetallspiralfeder wieder abgeschaltet wird.

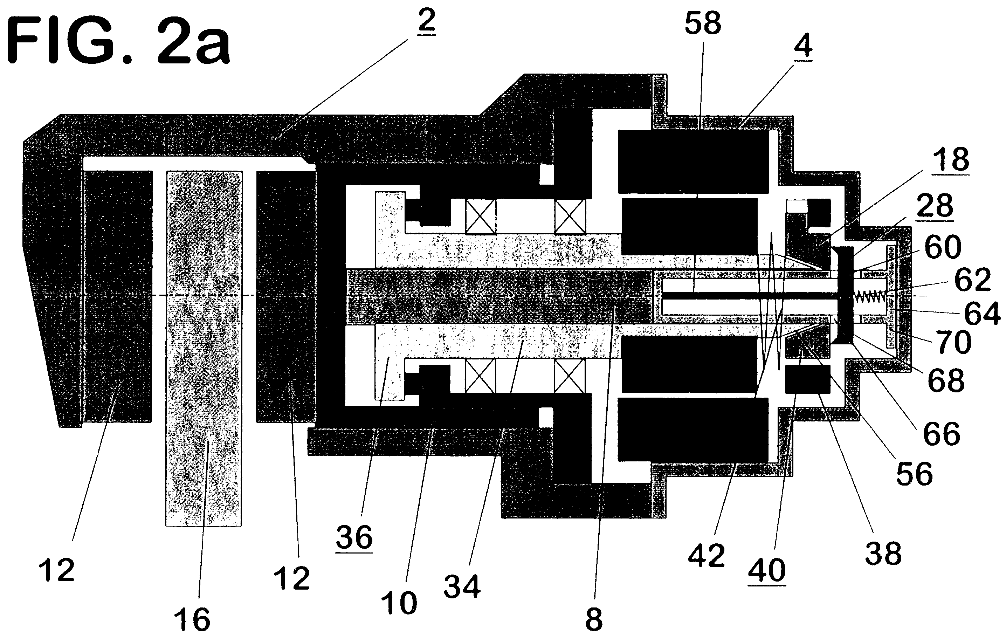

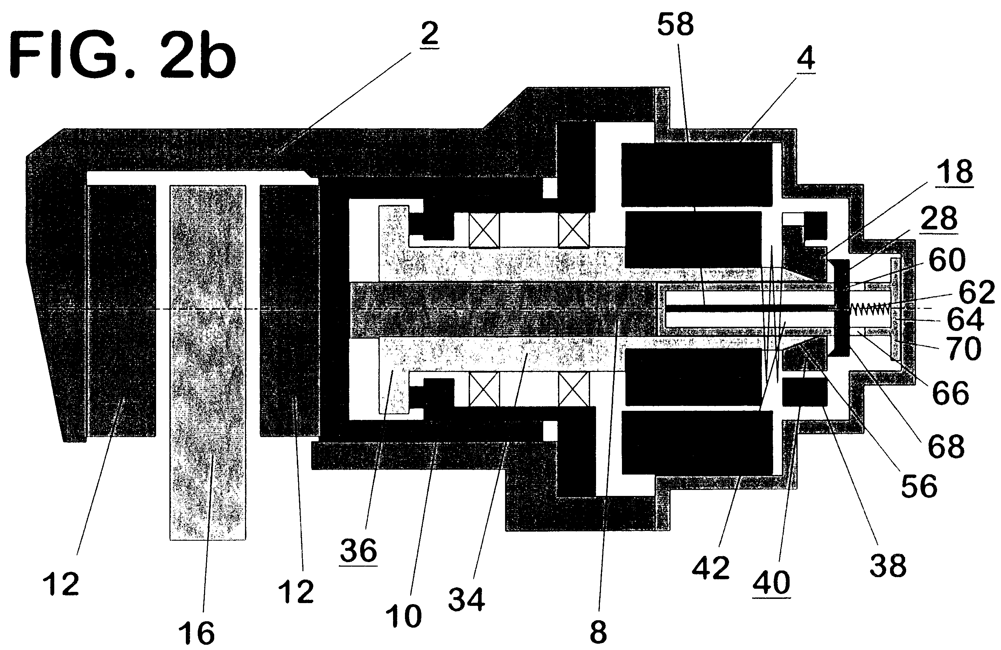

Figur 2 zeigt in schematischer Darstellung einen Bremsaktuator 2 im Querschnitt, wobei nur die für die nachfolgenden Erläuterungen notwendigen Bestandteile gezeigt sind. Der Bremsaktuator 2 enthält einen Elektromotor 4, der in Wirkverbindung mit einer Motorachse 34 einer Zuspannvorrichtung 36 steht. Bei einem Bremsvorgang wird durch den Elektromotor 4 die Motorachse in Rotation entgegen dem Uhrzeigersinn (bei Blickrichtung durch die Feststellbremse 18 auf die Motorachse 34) versetzt. Die Rotation der Motorachse 34 wird auf die Spindel 8 übertragen und in eine axiale Bewegung der Spindel 8 umgewandelt. Aufgrund dessen treibt die Spindel 8 einen Bremskolben 10 an, so dass durch diesen die Bremsbeläge 12a und 12b an die Reibfläche 16, hier in Form einer Bremsscheibe 16, angepresst werden, wodurch schließlich eine Bremskraft entsteht. Nach Beendigung des Bremsvorganges wird der Elektromotor 4 derartig angetrieben, dass sich die Motorachse 34 im Uhrzeigersinn dreht, wobei sich auch in diesem Fall die Drehung der Motorachse 34 auf die Spindel 8 und den Bremskolben 10 überträgt, so dass diese wiederum in eine axiale Bewegung versetzt werden. Durch eine vorgegebene axiale Bewegung der Spindel 8 und des Bremskolbens 10 wird zwischen der Bremsscheibe 16 und den Bremsbelägen 12a und 12b ein definierter Luftspalt eingestellt.

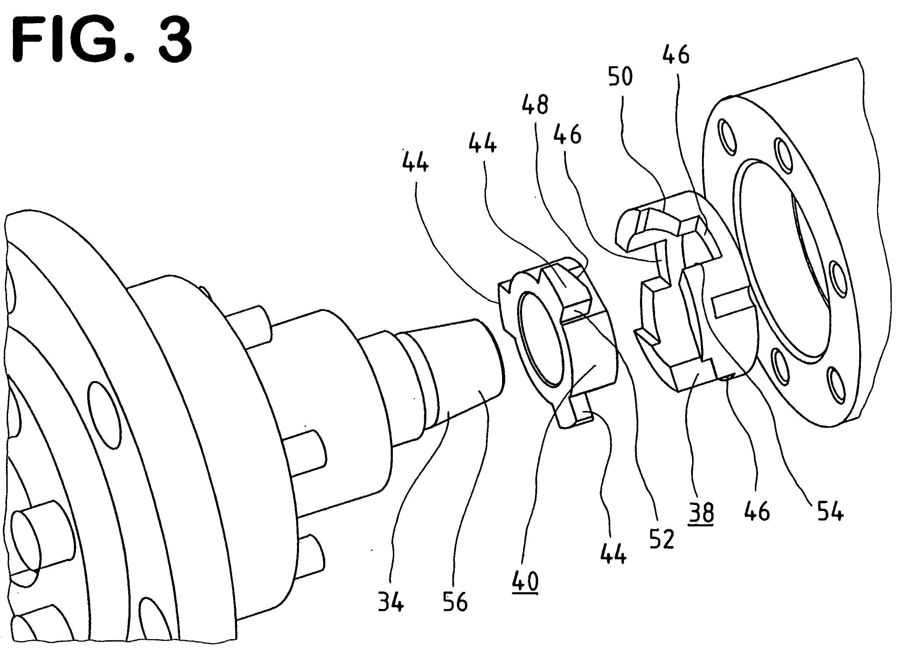

Neben den bisher erläuterten Bestandteilen verfügt der Bremsaktuator 2 über eine Feststellbremse 18, bestehend aus einem gehäusefesten Sperrring 38, einem Konusring 40 und einer Feder 42. Darüber hinaus enthält der Bremsaktuator 2 eine Betätigungsvorrichtung 28. Durch diese kann der auf der Motorachse 34 befindliche Konusring 40 entgegen der Federkraft der Feder 42 in seiner axialen Position verschoben werden. In der ersten axialen Position verschwinden die Zähne 44 des Konusringes 40 in den Vertiefungen 46 des Sperrringes 38 (s. Fig. 3), so dass in dieser ersten axialen Position der Konusring 40 gegenüber dem Sperrring 38 nicht verdrehbar ist. Die zweite axiale Position des Konusringes 40 zeichnet sich dadurch aus, dass die Zähne 44 des Konusringes 40 aus den Vertiefungen 46 des Sperrringes 38 zum Teil herausgeschoben sind. In dieser zweiten axialen Position ist der Konusring 40 im Uhrzeigersinn (bei Blickrichtung durch den Sperrring 38 auf den Konusring 40) gegenüber dem Sperrring 38 soweit verdrehbar, bis die Schrägen 48 der Zähne 44 des Konusringes 40 sich im Eingriff mit den Rampen 50 der Vertiefungen 46 des Sperrringes 38 befinden. Sobald die Schrägen 48 der Zähne 44 auf den Rampen 50 der Vertiefungen 46 aufliegen, dreht sich der Konusring 40 am Sperrring 38 fest. Eine Drehung gegen den Uhrzeigersinn ist möglich, bis die Flanken 52 der Zähne 44 an den entsprechenden Seitenwänden 54 der Vertiefungen 46 des Sperrringes 38 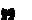 anschlagen" (s. Fig. 3).

Im Folgenden wird anhand der Figuren 2 und 3 erläutert, wie mit Hilfe der Feststellbremse 18 ein dem Bremsaktuator 2 zugeordnetes Rad eines Kraftfahrzeuges feststellbar ist. Zunächst wird über den Elektromotor 4 der Bremsaktuator 2 solange betätigt, bis die Bremsbeläge 12a und 12b an der Bremsscheibe 16 anliegen, wodurch am entsprechenden Rad eine Bremskraft erzeugt wird. Danach wird mit der Betätigungsvorrichtung 28 entgegen der Federkraft der Feder 42 der Konusring 40 von seiner ersten axialen Position, in der sich die Zähne 44 in den Vertiefungen 46 befinden, in seine zweite axiale Position verschoben, in der Zähne 44 zum Teil aus den Vertiefungen 46 herausgeschoben sind. Eine axiale Verschiebung des Konusringes 40 durch die Betätigungsvorrichtung 28 ist solange möglich, bis der Konus des Konusringes 40 in Eingriff mit dem Konus 56 der Motorachse 34 gelangt und sich der Konusring 40 auf der Motorachse 34 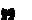 festsetzt". Befindet sich der Konusring 40 auf der Motorachse 34, so wird der Konusring 40 mit dieser im Uhrzeigersinn zurückgedreht, bis die Schrägen 48 der Zähne 44 des Konusringes 40 zum Aufliegen auf den Rampen 50 der Vertiefungen 46 des Sperrringes 38 gelangen. Eine weitere Drehung der Motorachse 34 im Uhrzeigersinn führt dazu, dass sich der Konusring 40 über die Schrägen 48 in dem Sperrring 38 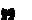 festdreht". Die Motorachse 34 dreht nicht weiter und die Bremsbeläge 12a und 12b sind an der Bremsscheibe 16 festgestellt, da die Rückstellkräfte in dem Bremsaktuator 2 nicht ausreichen, um die Motorachse 34 gegenüber dem auf der Motorachse 34 festsitzenden Konusring 40 zu verdrehen.

Ein Lösen der Feststellbremse geschieht wie folgt: Der Elektromotor 4 wird derartig angesteuert, dass sich die Motorachse 34 entgegen dem Uhrzeigersinn dreht. Infolgedessen wird auch der Konusring 40, der auf der Motorachse 34 festsitzt, entgegen dem Uhrzeigersinn gedreht und die Schrägen 48 der Zähne 44 heben von den Rampen 50 der Vertiefungen 46 ab, wenn der Elektromotor 4 eine genügend große Kraft aufbringt. Bei einer weiteren Drehung gegen den Uhrzeigersinn schlagen die Flanken 52 der Zähne 44 an den Seitenwänden 54 der Vertiefungen 46 an, so dass der Konus des Konusringes 40 sich nicht weiter entgegengesetzt zu dem Uhrzeigersinn drehen kann, da der Sperrring 38 gehäusefest ist. Wird der Elektromotor 4 mit genügend großer Kraft angetrieben, so dreht sich die Motorachse 34 alleine entgegengesetzt dem Uhrzeigersinn weiter und der Konusring 40 bricht vom Konus 56 der Motorachse 34 los. Danach wird der Konusring 40 durch die Feder 42 von seiner zweiten axialen Position in die erste male Position verschoben, so dass die Zähne 44 des Konusringes 40 wieder in den Vertiefungen 46 des Sperrringes 38 verschwinden. Danach kann die Motorachse 34 des Bremsaktuators 2 wieder frei in beide Drehrichtungen drehen und die Feststellbremse ist gelöst, so dass der Bremsaktuator 2 für normale Bremsvorgänge zur Verfügung steht.

Im Folgenden wird im Zusammenhang mit der Figur 2 kurz erläutert, wie die Betätigungsvorrichtung 28 aufgebaut ist. Die Betätigungsvorrichtung 28 verfügt über eine gehäusefest montierte Montagehülse 64, an deren einem Ende ein längliches Memorymetallelement 58 befestigt ist. Das Memorymetallelement 58 steht mit einem Flansch 60 in Wirkverbindung, der durch einen Längsschlitz 66 aus der Montagehülse 64 herausragt. Zwischen der Rückwand 68 des Flansches 60 und der Wand 70 der Montagehülse 64 ist eine Rückstellfeder 62 angeordnet. Bei einem Übergang des Memorymetallelementes von der Ausgangsposition in die Endposition, wobei sich das Memorymetallelement 58 verkürzt, wird der Flansch 60 in Längsrichtung innerhalb des Längsschlitzes 66 bewegt. Der Flansch 60 kann mit Hilfe der Rückstellfeder 62 in seine Ausgangsposition zurückbewegt werden.

Mit Hilfe der in der Figur 2 gezeigten Betätigungsvorrichtung 28 wird der zur Feststellbremse 18 gehörende Konusring 40 wie folgt von der ersten axialen Position in die zweite axiale Position verschoben. Durch das Memorymetallelement 58 wird ein Strom geschickt, so dass sich dieses erwärmt und infolge der Erwärmung von der in der Figur 2a gezeigten Ausgangsposition in die in der Figur 2b gezeigten Endposition übergeht. Bei dem Übergang von der Ausgangsposition in die Endposition verkürzt sich das Memorymetallelement 58, so dass der Flansch 60 infolge der Verkürzung den Konusring 40 auf die Motorachse 34 schiebt. Hierbei wird das Memorymetallelement nur auf Zug belastet, so dass es nicht knicken kann. Nachdem sichergestellt ist, dass sich der Konusring 40 mit der Motorachse 34 in Eingriff befindet, kann der Stromfluss durch das Memorymetallelement 58 unterbrochen werden. Das Memorymetallelement 58 kühlt dann ab. Die üblicherweise verwendeten Memorymetallelemente 58 können bei einer Abkühlung keine Arbeit an dem Flansch 60 verrichten, so dass der Flansch 60 durch eine Abkühlung des Memoryelementes 58 alleine nicht in die in der Figur 2a gezeigte Ausgangsposition zurückgeführt werden kann. Bei Memorymetallelementen 58, die bei einer Abkühlung keine Arbeit verrichten können, wird deshalb eine Rückstellfeder 62 verwendet, mit Hilfe der der Flansch 60 in die Ausgangsposition zurückbewegt wird. Der Konusring 40 bleibt solange zwischen der Motorachse 34 und der Sperrring 38 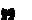 eingeklemmt" und der Bremsaktuator 2 somit solange festgestellt, bis der Konusring 40 durch eine entsprechende Bewegung der Motorachse 34 losgebrochen wird, wie es weiter oben beschrieben worden ist. Zum Betätigen der Feststellbremse ist also nur ein kurzzeitiger Stromfluss durch das Memorymetallelement 58 notwendig.

### Bezugszeichenliste

- 2: Bremsaktuator
- 4: Elektromotor
- 6: Spindelmutter
- 8: Spindel
- 10: Bremskolben
- 12: Bremsbeläge
- 14: Luftspalt
- 16: Reibfläche
- 18: Feststellbremse
- 20: Metallstift
- 22: Reibkopf
- 24: Andruckfeder
- 26: Gehäuse
- 28: Betätigungsvorrichtung
- 30: Rückwand
- 32: Flansch des Metallstiftes 20
- 34: Motorachse
- 36: Zuspannvorrichtung
- 38: gehäusefester Sperrring
- 40: Konusring
- 42: Feder
- 44: Zähne
- 46: Vertiefungen
- 48: Schrägen
- 50: Rampen
- 52: Flanke
- 54: Seitenwände
- 56: Konus der Motorachse 04
- 58: Memorymetallelement
- 60: Flansch
- 62: Rückstellfeder
- 64: Montagehülse
- 66: Längsschlitz
- 68: Rückwand

## Patentansprüche

1. Bremsaktuator (2) für eine elektrische Bremsanlage, der zumindest folgende Bestandteile enthält:
- einen Elektromotor (4)
- eine Zuspannvorrichtung (6), (8), (36), die mit dem Elektromotor (4) in Wirkverbindung steht und mittels der Bremsbeläge (12) gegen eine Reibfläche (16) pressbar sind
- eine Feststellbremse (18), die in einer ersten Position eine Bewegung der Zuspannvorrichtung ungehindert zulässt und in einer zweiten Position die Bewegung der Zuspannvorrichtung hemmt
- eine Betätigungsvorrichtung (28), mit der die Feststellbremse (18) von der ersten Position in die zweite Position überführbar ist
**dadurch gekennzeichnet,** dass
- die Betätigungsvorrichtung (28) ein Memorymetallelement (58) ist, das in einem ersten Temperaturbereich eine Ausgangsposition und in einem zweiten Temperaturbereich eine Endposition einnimmt und dass
- an dem Memoryelement (58) eine gezielte Temperaturänderung herbeiführbar ist, durch die das Memorymetallelement (58) von der Ausgangsposition in die Endposition überführbar ist und dass
- die Feststellbremse (18) infolge der Überführung des Memorymetallelementes (58) von der Ausgangsposition in die Endposition von der ersten Position in die zweite Position übergeht.

2. Bremsaktuator (2) nach Anspruch 1, dadurch gekennzeichnet, dass die Temperaturen des ersten Temperaturbereichs höher liegen als die Temperaturen des zweiten Temperaturbereichs.

3. Bremsaktuator nach Anspruch 1, dadurch gekennzeichnet, dass die Temperaturen des ersten Temperaturbereichs niedriger liegen als die Temperaturen des zweiten Temperatursbereichs.

4. Bremsaktuator (2) nach Anspruch 3, dadurch gekennzeichnet, dass die Betriebstemperatur des Bremsaktuators (2) im gesamten Betriebstemperaturspektrum unterhalb der Temperaturen im zweiten Temperaturbereich liegen.

5. Bremsaktuator nach einem der Ansprüche 1, 3 oder 4, dadurch gekennzeichnet, dass das Memorymetallelement (58) mit einer Rückstellfeder (62) in Wirkverbindung steht, die das Memorymetallelement (58) von der Endposition in die Ausgangsposition überführt, wenn die Temperatur an dem Memorymetallelement von dem zweiten Temperaturbereich in den ersten Temperaturbereich übergeht.

6. Bremsaktuator nach einem der Ansprüche 1 bis 5, dadurch gekennzeichnet, dass eine gezielte Erwärmung des Memorymetallelements (58) durch einen durch das Memorymetallelement (58) geleiteten Stromfluss erzeugt wird.

7. Bremsaktuator nach einem der Ansprüche 1 bis 6, dadurch gekennzeichnet, dass das Memorymetallelement (58) bei einem Übergang von der Ausgangsposition in die Endposition ausschließlich auf Zug belastet wird.

8. Elektrische Bremsanlage für ein Kraftfahrzeug, dadurch gekennzeichnet, dass mindestens ein Bremsaktuator (2) der elektrischen Bremsanlage gemäß einem der Ansprüche 1 bis 7 ausgebildet ist.
